# EUROPÄISCHE PATENTSCHRIFT

(11) **EP 2 705 411 B1**
(45) Veröffentlichungstag und Bekanntmachung des Hinweises auf die Patenterteilung: **29.03.2017**
(21) Anmeldenummer: 12745426.2
(22) Anmeldetag: 13.07.2012
(51) Int. Cl.: G05B 19/4063, G05B 23/02

(54) **VERFAHREN ZUR RECHNERGESTÜTZTEN VISUALISIERUNG EINES FEHLERBAUMS EINES TECHNISCHEN SYSTEMS**
METHOD FOR THE COMPUTER-AIDED VISUAL DISPLAY OF A FAULT TREE FOR A TECHNICAL SYSTEM
PROCÉDÉ DE VISUALISATION ASSISTÉE PAR ORDINATEUR D'UN ARBRE DE DÉFAILLANCES D'UN SYSTÈME TECHNIQUE

(30) Priorität: 08.08.2011 DE 102011080622
(43) Veröffentlichungstag der Anmeldung: 12.03.2014
(73) Patentinhaber: Siemens Aktiengesellschaft, 80333 München (DE)
(72) Erfinder: JOANNI, Andreas, 86356 Neusäß (DE); MONTRONE, Francesco, 85521 Riemerling (DE); MÄCKEL, Oliver, 85551 Heimstetten (DE); RÜTHER, Björn, 44135 Dortmund (DE); WEIL, Tobias, 44137 Dortmund (DE)
(86) Internationale Anmeldenummer: PCT/EP2012/063814
(87) Internationale Veröffentlichungsnummer: WO 2013/020777

(56) Entgegenhaltungen:
- EP-A1- 1 703 350
- EP-A1- 2 149 825
- Robert Bordley: "Representing Trees Using Microsoft Doughnut Charts", , 1. Januar 2002 (2002-01-01), XP55042305, Gefunden im Internet: URL:http://bordley.org/publications/decisi on/bordley.pdf [gefunden am 2012-10-25]

## Beschreibung

Die Erfindung betrifft ein Verfahren und eine Vorrichtung zur rechnergestützten Visualisierung eines Fehlerbaums eines technischen Systems.

Aus dem Stand der Technik ist es bekannt, das Ausfallverhalten eines technischen Systems basierend auf sog. Fehlerbäumen zu analysieren. Ein Fehlerbaum repräsentiert dabei eine hierarchische Struktur aus Knoten, welche Komponenten eines technischen Systems bzw. Kombinationen aus diesen Komponenten darstellen, die über logische Operatoren verknüpft sind. Einem Knoten kann ein Ausfallereignis der entsprechenden technischen Komponente bzw. der Kombination aus technischen Komponenten zugeordnet werden, und über die Verknüpfungen durch logische Operatoren kann basierend darauf abgeleitet werden, ob das technische System als Ganzes ausfällt bzw. welche Teile des technischen Systems ausfallen. Üblicherweise wird ein Fehlerbaum auch als eine hierarchische Baumstruktur visuell repräsentiert. Dabei ist es jedoch nachteilhaft, dass mit dieser Repräsentation nicht vermittelt wird, inwieweit einzelne technische Komponenten bzw. Kombinationen von technischen Komponenten für das Ausfallverhalten des technischen Systems relevant sind.

Die Druckschrift EP 1 703 350 A1 offenbart ein Verfahren zur Erzeugung eines Diagnosemodells für ein Automatisierungssystem, wobei die Automatisierungskomponenten durch Modellknoten repräsentiert werden und funktionale und/oder physikalische Beziehungen zwischen den Automatisierungskomponenten durch Verknüpfungen der entsprechenden Modellknoten innerhalb des Diagnosemodells abgebildet werden.

In der Druckschrift Rober Bordley: "Representing Trees Using Microsoft Doughnut Charts", 1. Januar 2002, ist die Darstellung eines Entscheidungsbaums basierend auf konzentrischen Ringsegmenten beschrieben, wobei jedes Ringsegment einen Knoten in dem Entscheidungsbaum repräsentiert und die Größe des Ringsegments eine Wahrscheinlichkeit bzw. ein finanzielles Ergebnis darstellt.

Die Druckschrift EP 2 149 825 A1 beschreibt einen Projektnavigator zur hierarchischen Darstellung von Technologieobjekten auf einer Anzeigevorrichtung, wobei die Technologieobjekte untereinander verschaltet sind und eine Maschine mit kaskadierter Gleichlaufsteuerung modellieren.

Aufgabe der Erfindung ist es, eine rechnergestützte Visualisierung eines Fehlerbaums eines technischen Systems zu schaffen, die einem Benutzer einfach und intuitiv neben der Struktur des Fehlerbaums auch weitergehende Informationen betreffend das Ausfallverhalten des technischen Systems vermittelt.

Diese Aufgabe wird durch das Verfahren gemäß Patentanspruch 1 bzw. die Vorrichtung gemäß Patentanspruch 18 gelöst. Weiterbildungen der Erfindung sind in den abhängigen Ansprüchen definiert.

Das erfindungsgemäße Verfahren visualisiert einen Fehlerbaum eines technischen Systems, das eine Vielzahl von technischen Komponenten umfasst, wobei der Fehlerbaum in an sich bekannter Weise eine hierarchische Struktur aus mehreren in Hierarchieebenen angeordneten Knoten beschreibt, welche jeweils eine technische Komponente oder eine Kombination aus mehreren technischen Komponenten repräsentieren. Die mehreren technischen Komponenten einer Kombination sind dabei über einen oder mehrere logische Operatoren verknüpft. Ein solcher Fehlerbaum beschreibt das Ausfallverhalten des technischen Systems in Abhängigkeit von dem Ausfall der durch die Knoten repräsentierten technischen Komponenten oder Kombinationen aus technischen Komponenten.

Im Rahmen des erfindungsgemäßen Verfahrens wird für jeden Knoten ein Beitragsmaß vorgegeben, wobei die Ermittlung dieses Beitragsmaßes ggf. auch durch das erfindungsgemäße Verfahren erfolgen kann. Das Beitragsmaß beschreibt dabei den Beitrag der durch den Knoten repräsentierten technischen Komponente oder Kombination aus technischen Komponenten zum Ausfallverhalten des technischen Systems. Das Beitragsmaß kann verschieden gewählt sein und Ausführungsbeispiele solcher Beitragsmaße werden weiter unten beschrieben.

Erfindungsgemäß wird zumindest ein Teil der hierarchischen Struktur des Fehlerbaums über eine visuelle Darstellung wiedergegeben, welche eine Vielzahl von konzentrisch angeordneten Ringsegmenten umfasst, wobei jedes Ringsegment einen Knoten darstellt und die Hierarchieebene, in welcher der Knoten im Fehlerbaum angeordnet ist, umso tiefer liegt, je weiter außen das Ringsegment in der visuellen Darstellung vom gemeinsamen Mittelpunkt aller Ringsegmente angeordnet ist. Dabei wird über die Länge eines jeweiligen Ringsegments in Umfangsrichtung die Größe des Beitragsmaßes des durch das jeweilige Ringsegment dargestellten Knotens wiedergegeben. Ferner werden die Ringsegmente durch Einkerbungen in entsprechenden Ringen visuell voneinander getrennt.

Mit der erfindungsgemäßen Darstellung des Fehlerbaums über entsprechende Ringsegmente kann einfach und intuitiv zum einen die hierarchische Struktur des Fehlerbaums und zum anderen Beiträge der entsprechenden technischen Komponenten bzw. Kombinationen aus technischen Komponenten zum Ausfallverhalten des technischen Systems wiedergegeben werden.

In einer besonders bevorzugten Ausführungsform gehört ein jeweiliges Ringsegment zu einem Ring aus einer Anzahl von konzentrisch angeordneten Ringen, wobei jeder Ring eine Hierarchieebene des Fehlerbaums repräsentiert, die umso tiefer liegt, je weiter außen der Ring angeordnet ist. Ein jeweiliger Ring umfasst somit eine Anzahl von Ringsegmenten entsprechend der Anzahl von Knoten in der jeweiligen Hierarchieebene. Hierdurch wird besonders einfach die Zuordnung der Ringsegmente zu Hierarchieebenen des Fehlerbaums visuell vermittelt. Die Ringe, zu denen die Ringsegmente gehören, brauchen dabei visuell nicht wiedergegeben werden. Nichtsdestotrotz besteht auch die Möglichkeit, die Ringe in der visuellen Darstellung anzuzeigen.

In einer weiteren Variante des erfindungsgemäßen Verfahrens sind die benachbart zu einem jeweiligen Ringsegment weiter außen liegenden Ringsegmente innerhalb des Kreissektors, der durch das jeweilige Ringsegment gebildet wird, Kindknoten des Knotens, der durch das jeweilige Ringsegment dargestellt wird. Auf diese Wiese werden in der visuellen Darstellung auch die Eltern-Kind-Beziehungen der Knoten des Fehlerbaums vermittelt.

In einer weiteren Ausführungsform werden neben dem durch die Länge der Ringsegmente wiedergegebenen Beitragsmaß ein oder mehrere weitere Beitragsmaße vorgegeben oder im Rahmen des Verfahrens ermittelt. Diese Beitragsmaße geben einen anderen Beitrag der durch den Knoten repräsentierten technischen Komponenten oder Kombinationen aus technischen Komponenten zum Ausfallverhalten des technischen Systems wieder.

In einer besonders bevorzugten Ausführungsform sind das Beitragsmaß und/oder die weiteren Beitragsmaße (sofern wiedergegeben) jeweils eine der folgenden Größen:
- der Beitrag der durch den Knoten repräsentierten technischen Komponente oder Kombination aus technischen Komponenten zur Unverfügbarkeit, wobei die Unverfügbarkeit ein Maß für den prozentualen Teil einer Sollbetriebszeit des technischen Systems ist, wobei der prozentuale Teil Ausfälle des technischen Systems repräsentiert;
- der Beitrag der durch den Knoten repräsentierten technischen Komponente oder Kombination aus technischen Komponenten zur mittleren Ausfall- bzw. Reparaturzeit des technischen Systems;
- der Beitrag der durch den Knoten repräsentierten technischen Komponente oder Kombination aus technischen Komponenten zur Ausfallrate des technischen Systems.

Die entsprechenden Beiträge können beispielsweise durch Sensitivitäten repräsentiert werden, wie näher in der detaillierten Beschreibung dargelegt wird. Eine Sensitivität repräsentiert dabei die entsprechende Veränderung der Unverfügbarkeit bzw. mittleren Ausfallzeit bzw. Ausfallrate des gesamten technischen Systems in Abhängigkeit von der Veränderung der Unverfügbarkeit bzw. mittleren Ausfallzeit bzw. Ausfallrate der entsprechenden technischen Komponente bzw. Kombination aus technischen Komponenten.

Sollten in dem erfindungsgemäßen Verfahren ein oder mehrere weitere Beitragsmaße neben dem über die Länge der Ringsegmente codierten Beitragsmaß wiedergegeben werden, so werden in einer bevorzugten Variante der Erfindung zumindest für einen Teil der Knoten und insbesondere für eine (einzelne) technische Komponente repräsentierende Knoten die Größe des oder der weiteren Beitragsmaße in der visuellen Darstellung zusätzlich vermittelt. Dies kann beispielsweise dadurch geschehen, dass die Größe des oder der weiteren Beitragsmaße durch einen oder mehrere Balken angegeben werden, welche in der visuellen Darstellung dem entsprechenden Ringsegment zuordenbar sind. Diese Zuordnung kann in einer bevorzugten Ausführungsform dadurch erreicht werden, dass der oder die Balken in dem Kreissektor angeordnet sind, der durch das entsprechende Ringsegment gebildet wird, zu dem der oder die Balken gehören, wobei der oder die Balken vorzugsweise in dem Abschnitt des Kreissegments positioniert sind, der sich von dem entsprechenden Ringsegment radial nach außen erstreckt und/oder wobei der oder die Balken sich vorzugsweise in radialer Richtung in Bezug auf das entsprechende Ringsegment erstrecken. Auf diese Weise werden dem Benutzer intuitiv auch die Größen von weiteren Beiträgen zum Ausfallverhalten des technischen Systems visuell vermittelt.

In einer weiteren bevorzugten Ausgestaltung wird die visuelle Darstellung in einem kreisförmigen Anzeigebereich wiedergegeben. Wird diese Darstellung mit der Wiedergabe von weiteren Beitragsmaßen basierend auf Balken kombiniert, so werden in einer Variante des erfindungsgemäßen Verfahrens der oder die Balken derart angeordnet, dass sich die Balken vom Rand des kreisförmigen Anzeigebereichs radial nach innen erstrecken.

In einer weiteren Ausführungsform werden die Ringsegmente auch nach vorbestimmten Kriterien farblich voneinander unterschieden. Vorzugsweise werden dabei Ringsegmente für Knoten, welche eine (einzelne) technische Komponente repräsentieren, in der gleichen Farbe wiedergegeben. Alternativ oder zusätzlich können Ringsegmente für Knoten, welche eine Kombination von technischen Komponenten repräsentieren, innerhalb des gleichen Rings in der gleichen Farbe und in unterschiedlichen Ringen in verschiedenen Farben wiedergegeben, wobei sich die Farben von Ringsegmenten für Knoten, welche eine Kombination aus technischen Komponenten repräsentieren, vorzugsweise von der Farbe von Ringsegmenten für Knoten unterscheiden, welche eine (einzelne) technische Komponente repräsentieren. Mit dieser Variante des erfindungsgemäßen Verfahrens können über eine entsprechende farbige Codierung verschiedene Hierarchieebenen des Fehlerbaums bzw. verschiedene Arten von Knoten geeignet unterschieden werden.

In einer weiteren Ausgestaltung des erfindungsgemäßen Verfahrens sind in dem Zentrum der visuellen Darstellung textuelle Informationen zu dem technischen System und insbesondere zu seinem Ausfallverhalten wiedergegeben. Diese Informationen können beispielsweise den Namen des Fehlerbaums bzw. des technischen Systems enthalten, sowie weitere Größen, wie z.B. die Ausfallrate des technischen Systems, die mittlere Zeit zwischen zwei Ausfällen im technischen System bzw. die mittlere Ausfallzeit des technischen Systems.

In einer weiteren Ausführungsform des erfindungsgemäßen Verfahrens werden in der visuellen Darstellung Ringsegmente, welche eine vorbestimmte Größe unterschreiten, nicht dargestellt, wobei vorzugsweise durch ein oder mehrere vorbestimmte Symbole in der visuellen Darstellung auf solche Ringsegmente hingewiesen wird. Gemäß dieser Ausführungsform wird der Tatsache Rechnung getragen, dass bei sehr komplexen Fehlerbäumen nicht mehr alle Knoten zur Betrachtung durch den Benutzer aufgelöst werden können.

In einer weiteren Ausgestaltung des erfindungsgemäßen Verfahrens sind in der visuellen Darstellung textuelle Informationen betreffend zumindest einen Teil der Ringsegmente wiedergegeben bzw. wiedergebbar. Insbesondere werden textuelle Informationen in Antwort auf eine oder mehrere Benutzerinteraktion wiedergegeben. Zum Beispiel kann ein Benutzer über eine Benutzerschnittstelle einen Zeiger (z.B. einen Mauszeiger) auf der Anzeigefläche (z.B. einem Monitor) bewegen, auf dem die visuelle Darstellung des Fehlerbaums erfolgt. Befindet sich dabei der Zeiger über einem Ringsegment, können automatisch oder basierend auf einer weiteren Benutzerinteraktion

(z.B. Mausklick) Informationen zu dem Ringsegment, wie z.B. der Name der technischen Komponente bzw. des aus mehreren technischen Komponenten zusammengesetzten Moduls, angegeben werden.

Das erfindungsgemäße Verfahren kann zur Visualisierung beliebiger Fehlerbäume benutzt werden. In einer bevorzugten Variante wird mit dem Fehlerbaum ein technisches System in der Form einer Automatisierungsanlage beschrieben, insbesondere einer Anlage zur Industrieautomatisierung (z.B. zur Fertigung von Produkten oder Durchführung von Prozessen) oder einer Anlage zur Energieautomatisierung.

Neben dem oben beschriebenen Verfahren betrifft die Erfindung eine Vorrichtung zur rechnergestützten Visualisierung eines Fehlerbaums eines technischen Systems, umfassend eine Anzeigeeinrichtung und eine Rechnereinrichtung, wobei die Rechnereinrichtung Signale für die Anzeigeeinrichtung derart erzeugt, dass der Fehlerbaum gemäß dem oben beschriebenen Verfahren bzw. einer oder mehreren Varianten des oben beschriebenen Verfahrens auf der Anzeigeeinrichtung visualisiert wird.

Ausführungsbeispiele der Erfindung werden nachfolgend anhand der beigefügten Figuren detailliert beschrieben.

Es zeigen:
- Fig. 1: eine Darstellung, welche eine Ausführungsform einer erfindungsgemäßen Visualisierung eines Fehlerbaums sowie den entsprechenden Fehlerbaum wiedergibt;
- Fig. 2: eine Darstellung analog zu Fig. 1, welche die Zuordnung der einzelnen Knoten des Fehlerbaums zu den Ringsegmenten der visuellen Darstellungen verdeutlicht; und
- Fig. 3: eine Darstellung, welche ein zweites Ausführungsbeispiel einer erfindungsgemäßen Visualisierung eines Fehlerbaums wiedergibt.

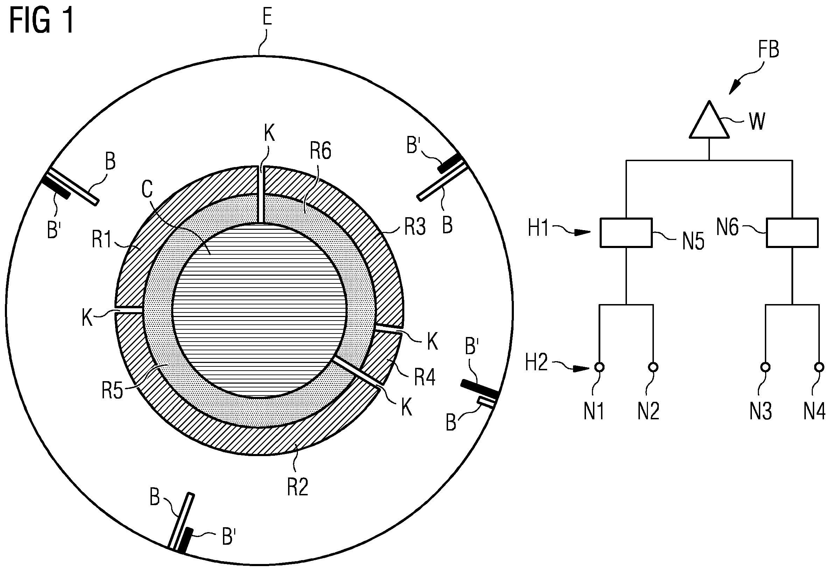

Nachfolgend wird anhand von Fig. 1 für einen einfach strukturierten Fehlerbaum eine Ausführungsform einer erfindungsgemäßen Visualisierung dieses Fehlerbaums beschrieben. Der Fehlerbaum ist dabei mit FB bezeichnet und dient dazu, die Ausfälle eines technischen Systems in Abhängigkeit von den Ausfällen einzelner technischer Komponenten des technischen Systems bzw. Kombinationen von technischen Komponenten des technischen Systems zu beschreiben. Die Erstellung eines solchen Fehlerbaums ist an sich bekannt und nicht Gegenstand der Erfindung.

Das gesamte technische System wird im Fehlerbaum FB durch eine Wurzel W repräsentiert, die in Fig. 1 als Dreieck wiedergegeben ist. Der Begriff des gesamten technischen Systems ist dabei weit zu verstehen und kann insbesondere auch ein Teilsystem eines größeren Systems darstellen. Das durch die Wurzel W repräsentierte System umfasst eine Mehrzahl von einzelnen technischen Komponenten bzw. Kombinationen aus technischen Komponenten, welche durch Knoten wiedergegeben sind. Diese Knoten sind in einer hierarchischen Struktur vernetzt, wodurch das Verhalten des technischen Systems beim Ausfall von Komponenten bzw. von Kombinationen aus Komponenten beschreiben wird.

In dem Fehlerbaum FB ist eine erste Hierarchieebene H1 und eine zweite Hierarchieebene H2 vorgesehen. In der Hierarchieebene H2 befinden sich vier Knoten N1, N2, N3 und N4, welche einzelne technische Komponenten und damit die kleinsten Einheiten in Bezug auf den wiedergegebenen Fehlerbaum darstellen. Dabei wird die Kombination aus technischen Komponenten N1 und N2 durch einen Knoten N5 in der nächst höheren Hierarchieebene H1 repräsentiert, wohingegen die Kombination technischen Komponenten N3 und N4 durch den Knoten N6 in der Hierarchieebene H1 repräsentiert wird. Die Knoten N5 bzw. N6 können ggf. ein entsprechendes Modul im technischen System darstellen, welches aus den jeweiligen Komponenten N1 und N2 bzw. N3 und N4 besteht. Darüber hinaus stellen die einzelnen Knoten N5 bzw. N6 eine logische Verknüpfung der Kindknoten N1 und N2 bzw. N3 und N4 dar, beispielsweise eine ODER-Kombination oder eine UND-Kombination. Durch solche logischen Operatoren erfolgt eine Verknüpfung der durch die Knoten N1 bis N4 repräsentierten Basisereignisse, wobei ein Basisereignis den Ausfall der entsprechenden technischen Komponente repräsentiert. Ist im Knoten N5 beispielsweise ein ODER-Gatter realisiert, so bedeutet dies, dass immer dann, wenn eine der durch die Knoten N1 und N2 repräsentierten technischen Komponenten ausfällt, dies auch zum Ausfall des Knotens N5 führt. In der Wurzel W sind die Knoten N5 und N6 wiederum in geeigneter Weise logisch verknüpft. Ist die logische Verknüpfung wieder eine ODER-Verknüpfung, so führt ein Ausfall des Knotens N1 oder des Knotens N2 dazu, dass der Knoten N5 und damit aufgrund der ODER-Verknüpfung in der Wurzel W auch das gesamte technische System ausfällt.

Innerhalb des Fehlerbaums FB sind für die einzelnen Knoten weitere Parameter hinterlegt, welche das Ausfallverhalten der Knoten und damit der durch die Knoten repräsentierten technischen Komponenten bzw. Kombinationen aus technischen Komponenten beschreiben. In der hier beschriebenen Ausführungsform sind für die Knoten eine Unverfügbarkeit, eine Unzuverlässigkeit bzw. eine Ausfallrate sowie eine mittlere Ausfall- bzw. Reparaturzeit hinterlegt. Die Unverfügbarkeit ist die Differenz aus dem Wert 1 und der Verfügbarkeit, wobei die Verfügbarkeit den Quotienten aus der Zeit des tatsächlichen Betriebs des entsprechenden Knotens geteilt durch die Sollbetriebszeit ist. Die Zeit des tatsächlichen Betriebs wird dabei durch die mittlere Zeit MTBF zwischen zwei Ausfällen repräsentiert und die Sollbetriebszeit durch die Summe aus mittlerer Ausfallzeit MDT und der mittleren Zeit MTBF zwischen zwei Ausfällen. Die Unzuverlässigkeit entspricht der Ausfallrate, welche der reziproke Wert der o.g. Zeit MTBF zwischen zwei Ausfällen ist.

Im Rahmen der hier beschriebenen Ausführungsform werden nunmehr für die einzelnen Knoten deren Beiträge zur Unverfügbarkeit bzw. Ausfallrate bzw. mittleren Ausfallzeit ermittelt. Diese Beiträge stellen Sensitivitäten dar, welche in Abhängigkeit von einer Änderung der Unverfügbarkeit bzw. Ausfallrate bzw. mittleren Ausfallzeit für einen entsprechenden Knoten die daraus resultierende Änderung der Unverfügbarkeit bzw. Ausfallrate bzw. mittleren Ausfallzeit für das gesamte technische System repräsentieren. Diese Sensitivitäten können durch die partielle Ableitung der Unverfügbarkeit bzw. Ausfallrate bzw. mittleren Ausfallzeit des gesamten technischen Systems nach der Unverfügbarkeit bzw. Ausfallrate bzw. mittleren Ausfallzeit des jeweiligen Knotens beschrieben werden. Die soeben beschriebenen Sensitivitäten, welche Ausführungsformen der in den Ansprüchen definierten Beitragsmaße darstellen, werden im Rahmen der erfindungsgemäßen visuellen Repräsentation des Fehlerbaums einem Betrachter zumindest teilweise vermittelt, wie nachfolgend beschrieben wird.

Eine Ausführungsform einer erfindungsgemäßen visuellen Repräsentation für den Fehlerbaum FB ist im linken Teil der Fig. 1 wiedergegeben. Die visuelle Darstellung ist dabei in einem kreisförmigen Abschnitt enthalten, der durch den Kreisrand E begrenzt ist. Die in der Darstellung enthaltenen Elemente sind üblicherweise farbig wiedergegeben. Die Darstellung umfasst einen inneren Kreis C, dessen Kreisfläche durch eine horizontale Schraffur angedeutet ist. Dieser Kreis kann z.B. schwarz gefärbt sein und repräsentiert das technische System in seiner Gesamtheit, d.h. der Kreis C kann mit der Wurzel W des Fehlerbaums FB identifiziert werden. Um den Kreis erstrecken sich zwei Kreisringe, die wiederum in einzelne Ringsegmente unterteilt sind. Jeder Kreisring stellt dabei eine Hierarchieebene des Fehlerbaums dar. Insbesondere wird durch den inneren, an den Kreis C angrenzenden Kreisring die Hierarchieebene H1 repräsentiert und durch den daran anschließenden äußeren Kreisring die Hierarchieebene H2.

Jeder Ring ist entsprechend der Anzahl der Knoten in der Hierarchieebene in Ringsegmente unterteilt. Das heißt, jedes Ringsegment entspricht einem Knoten des Fehlerbaums FB. Für den inneren Ring, der gepunktet dargestellt ist, repräsentiert das Ringsegment R5 den Knoten N5 und das Ringsegment R6 den Knoten N6. Die beiden Segmente werden dabei durch zwei Einkerbungen K visuell voneinander getrennt, wobei diese Einkerbungen auch Ringsegmente des äußeren Rings trennen. Die Ringsegmente R5 und R6 sind in einer farbigen Darstellung beispielsweise in einer grauen Farbe wiedergegeben, wobei eine graue Farbe in Fig. 1 immer für solche Knoten verwendet wird, welche Kombinationen von technischen Komponenten und keine einzelnen technischen Komponenten betreffen.

Erfindungswesentlich ist nunmehr, dass durch den Winkelbereich, den die einzelnen Ringsegmente einnehmen (d.h. durch die Länge der Ringsegmente in Umfangsrichtung), zum Ausdruck gebracht wird, wie groß eines der oben beschriebenen Beitragsmaße ist. Die Darstellung ist dabei derart normiert, dass die Länge aller Ringsegmente in einem Ring der Summe aller Sensitivitäten der entsprechenden Knoten entspricht. In der Ausführungsform der Fig. 1 codiert die Länge der Ringsegmente dabei den entsprechenden Beitrag des Knotens zur Unverfügbarkeit. Jedoch ist es auch möglich, stattdessen die Beiträge zur Ausfallrate bzw. zur mittleren Ausfallzeit über die Länge der Ringsegmente darzustellen. Wie aus Fig. 1 ersichtlich ist, hat der Knoten N5 einen höheren Beitrag zur Unverfügbarkeit als der Knoten N6.

Um nunmehr die Struktur des Fehlerbaums in der weiteren Hierarchieebene H2 zu vermitteln, werden die entsprechenden Kindknoten in der Hierarchieebene H2 in einem Kreissektor wiedergegeben, der durch das entsprechende Ringsegment des Elternknotens aufgespannt wird. Auf diese Weise wird dem Betrachter einfach und intuitiv vermittelt, wie der Fehlerbaum in den weiteren Hierarchieebenen aufgebaut ist. Innerhalb des Kreissektors, der durch das Ringsegment R5 aufgespannt ist, werden demzufolge Ringsegmente R1 und R2 angeordnet, welche dem Knoten N1 bzw. N2 entsprechen. Wiederum repräsentiert die Länge der Ringsegmente den Beitrag des entsprechenden Knotens bzw. der entsprechenden technischen Komponente zur Unverfügbarkeit des gesamten technischen Systems. Man erkennt dabei, dass dieser Beitrag für den Knoten N2 größer ist als für den Knoten N1. Analog sind in dem Kreissegment, das durch das Ringsegment R6 aufgespannt ist, entsprechende Ringsegmente R3 und R4 wiedergegeben, wobei das Ringsegment R3 dem Knoten N3 und das Ringsegment R4 dem Knoten N4 entspricht. Man erkennt wiederum, dass aufgrund des größeren Ringsegments R3 der Knoten N3 einen größeren Beitrag zur Unverfügbarkeit des technischen Systems als der Knoten N4 hat, dessen Ringsegment R4 in Umfangsrichtung eine geringere Erstreckung hat.

In Analogie zum inneren Ring sind auch die Ringsegmente des äußeren Rings durch Einkerbungen K voneinander visuell unterschieden. Die Ringsegmente des äußeren Rings sind in der Ausführungsform der Fig. 1 schraffiert wiedergegeben und werden in einer farbigen Darstellung in der gleichen Farbe, beispielsweise in grün angezeigt. Durch die unterschiedliche Farbwiedergebung der beiden Ringe kann dem Betrachter visuell vermittelt werden, welche Ringsegmente sich auf einzelne technische Komponenten des technischen Systems und welche Ringsegmente sich auf Kombinationen dieser Komponenten beziehen.

Wie bereits erwähnt, werden durch die Länge der Ringsegmente die Beiträge zur Unverfügbarkeit repräsentiert. Um auch die oben beschriebenen Beiträge zur Ausfallrate bzw. mittleren Ausfallzeit wiederzugeben, werden in der visuellen Darstellung der Fig. 1 Balken B bzw. B' verwendet, wobei der Balken B den Beitrag zur Ausfallrate und der Balken B' den Beitrag zur mittleren Ausfallzeit darstellt. Die Balken sind dabei visuell voneinander unterschieden. Beispielsweise kann der schwarz dargestellte Balken B' in violetter Farbe und der weiß dargestellte Balken in blauer Farbe wiedergegeben sein. Durch die Position der Balken wird dem Betrachter vermittelt, auf welches Ringsegment bzw. auf welchen Knoten sich die Balken beziehen. Dies geschieht dadurch, dass die entsprechenden Balken im Wesentlichen mittig in demjenigen Kreissektor angeordnet werden, der durch ein Ringsegment aufgespannt wird, für das durch die Balken die entsprechenden Beiträge angegeben werden. Die Balken sind in der Darstellung der Fig. 1 am äußeren Rand E angeordnet und erstrecken sich von dort radial nach innen. Dabei ist zu beachten, dass mit den Balken die entsprechenden Beiträge immer nur für diejenigen Knoten angegeben werden, welche durch den äußeren Ring der Darstellung repräsentiert werden, d.h. die dargestellten Balken zeigen immer die Beiträge für die einzelnen technischen Komponenten in der Hierarchieebene H2.

Wie sich aus Fig. 1 ergibt, kann mit der Darstellung des Fehlerbaums basierend auf Ringsegmenten auf einfache Weise sowohl die Struktur des Fehlerbaums als auch die Beiträge der einzelnen technischen Komponenten zum Ausfallverhalten des technischen Systems vermittelt werden. Ein Benutzer erkennt somit schnell, welche Komponenten bzw. Module im technischen System einen besonders hohen Beitrag zu einem Ausfall des technischen Systems leisten. Somit können Schwachstellen im technischen System schnell erkannt und überprüft werden.

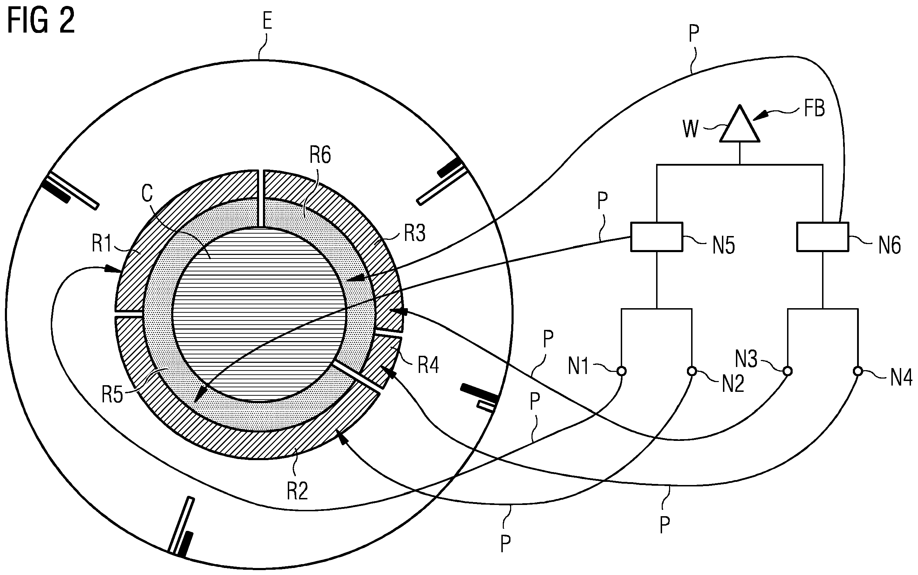

Fig. 2 zeigt nochmals eine Darstellung analog zur Fig. 1, wobei aus Übersichtlichkeitsgrünen nur teilweise die einzeln dargestellten Elemente mit Bezugszeichen versehen sind. Fig. 2 verdeutlicht nochmals die Zuordnung der einzelnen Knoten des Fehlerbaums zu den entsprechenden Ringsegmenten der visuellen Repräsentation des Fehlerbaums. Dies wird durch entsprechende Pfeile P hervorgehoben, welche sich von dem Knoten hin zu dem Ringsegment erstrecken, durch das der jedem Knoten in der visuellen Darstellung repräsentiert wird.

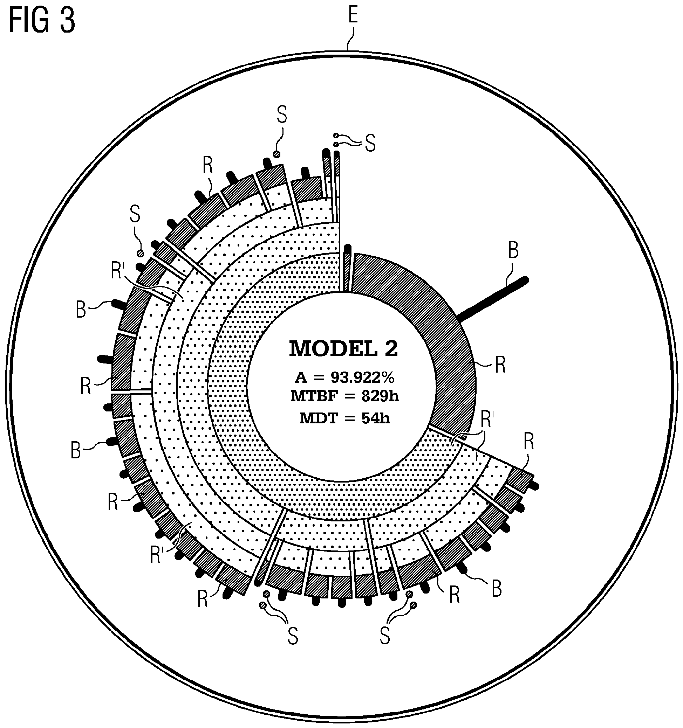

Die anhand von Fig. 1 und Fig. 2 beschriebene Ausführungsform zeigt die visuelle Repräsentation eines sehr einfachen Fehlerbaums, um hierdurch die wesentlichen Merkmale der Erfindung besonders anschaulich zu erläutern. Üblicherweise sind Fehlerbäume wesentlich komplexer aufgebaut und umfassen eine große Anzahl von Hierarchieebenen sowie darin angeordnete Knoten bzw. technischen Komponenten. Dies wird nochmals anhand von Fig. 3 verdeutlicht, welche eine weitere Ausführungsform einer erfindungsgemäßen visuellen Darstellung wiedergibt, die auf einem größeren Fehlerbaum basiert. Bis auf kleinere Detailunterschiede, werden dabei die gleichen Elemente zur Repräsentation des Fehlerbaums genutzt, d.h. der Fehlerbaum wird wiederum durch entsprechende Ringsegmente wiedergegeben, wobei die Länge der Ringsegmente ein Beitragsmaß des entsprechenden Knotens zur Unverfügbarkeit repräsentiert.

In Analogie zur Fig. 1 wird der Fehlerbaum wieder innerhalb eines Kreises mit dem Rand E dargestellt. Im Unterschied zur Fig. 1 sind nunmehr in der Mitte der visuellen Darstellung, welche durch den innersten Ring aus Ringsegmenten umgeben ist, weitere Informationen zum technischen System wiedergegeben. Insbesondere wird durch "Model 2" der entsprechende Fehlerbaum bzw. das durch den Fehlerbaum repräsentierte technische System identifiziert. Ferner werden für das gesamte technische System die Ausfallrate A, die mittlere Zeit MTBF zwischen zwei Ausfällen und die mittlere Ausfallzeit MDT wiedergegeben. Die Ausfallrate A liegt dabei bei 93,922 %, die mittlere Zeit zwischen zwei Ausfällen bei 829 Stunden und die mittlere Ausfallzeit bei 54 Stunden. Aus Übersichtlichkeitsgründen wurden die einzelnen Ringsegmente der Darstellung der Fig. 3 nicht alle mit Bezugszeichen versehen. Nichtsdestotrotz ist ersichtlich, dass einige Ringsegmente in Analogie zu Fig. 2 schraffiert gezeigt sind, wohingegen andere Ringsegmente mit Punkten gefüllt sind. Die schraffierten Ringsegmente, welche nur teilweise mit dem Bezugszeichen R versehen sind, entsprechen dabei Knoten, welche sich auf einzelne technische Komponente beziehen und in Analogie zur Fig. 1 in einer farbigen Darstellung z.B. grün wiedergegeben werden. Demgegenüber sind die Ringsegmente mit den gepunkteten Flächen, welche nur teilweise mit Bezugszeichen R' versehen sind, in Analogie zu Fig. 1 in einer grauen Farbe dargestellt. Die Dichte der Punkte in den einzelnen Segmenten zeigt dabei an, wie grau das entsprechende Segment ist. Das heißt, je dichter die Punkte liegen, desto dunkler ist die entsprechende Graustufe. Innerhalb eines Rings wird dabei dieselbe Graustufe verwendet, so dass visuell vermittelt wird, welche Ringsegmente zur gleichen Hierarchieebene gehören. In Analogie zu Fig. 1 handelt es sich bei den Ringsegmenten R' um Knoten des Fehlerbaums, welche nicht eine einzelne technische Komponente, sondern eine Kombination aus mehreren Komponenten darstellen, die über entsprechende logische Operatoren verknüpft sind.

In Fig. 3 sind einzelne Ringsegmente wiederum durch entsprechende Einkerbungen in den einzelnen Ringen visuell voneinander getrennt. Darüber hinaus wird neben dem durch die Länge der Ringsegmente codierten Beitrag zur Unverfügbarkeit auch ein weiteres Beitragsmaß visuell vermittelt, welches über entsprechende Balken B wiedergegeben wird. Die Länge der einzelnen, nur teilweise mit Bezugszeichen versehenen Balken B repräsentiert dabei die Größe des entsprechenden weiteren Beitragsmaßes. Die Zuordnung der Balken zu den Ringsegmenten erfolgt dadurch, dass die Balken mittig auf denjenigen Ringsegmenten angeordnet sind, auf die sie sich beziehen. In Analogie zu Fig. 1 erstrecken sich die Balken wieder in radialer Richtung, nunmehr jedoch nicht vom Rand E nach innen, sondern von den Ringsegmenten nach außen hin zum Rand E. Die weiteren Beitragsmaße werden dabei nur für solche Knoten wiedergegeben, die einzelne technische Komponenten im technischen System darstellen.

Da das durch die Darstellung der Fig. 3 repräsentierte technische System eine Vielzahl von Komponenten aufweist, können unter Umständen technische Komponenten bzw. Knoten mit sehr kleinen Beitragsmaßen visuell nicht mehr dargestellt werden. In diesem Fall wird dann durch Symbole S in der Form von Punkten die Information vermittelt, dass das entsprechende Ringsegment weitere Unterteilungen enthält, die nicht mehr wiedergegeben werden können. Die Symbole S sind dabei benachbart zum äußeren Rand des entsprechenden Ringsegments in einer seiner Ecken angeordnet und haben vorzugsweise die gleiche Farbe wie die Ringsegmente R (z.B. grün). Durch diese Symbole erhält der Benutzer somit die Information, dass das entsprechende Ringsegment, benachbart zu dem die Symbole liegen, nicht eine einzelne technische Komponente, sondern mehrere technische Komponenten enthält, die jedoch sehr kleine Beitragsmaße aufweisen, die im Rahmen der gewählten Auflösung nicht mehr darstellbar sind.

In der Darstellung der Fig. 3 sind die Balken B schwarz dargestellt, wobei die Balken in einer farbigen Wiedergabe z.B. blau sind oder ggf. auch eine andere Farbe aufweisen. Die Farbe der Balken sollte sich dabei von den Farben der Ringsegmente unterscheiden. Ferner ist in der Darstellung der Fig. 3 der Hintergrund innerhalb der kreisförmigen Umrandung E weiß wiedergegeben. In einer farbigen Wiedergabe könnte dieser Hintergrund auch in einer anderen Farbe gewählt sein, z.B. könnte er schwarz dargestellt sein. In diesem Fall wird der Text im Zentrum der Darstellung dann entsprechend in weiß wiedergegeben, um sich vom Hintergrund zu unterscheiden. In der Ausführungsform der Fig. 3 wird nur ein einziges weiteres Beitragsmaß durch Balken B repräsentiert. Gegebenenfalls kann auch noch ein weiteres Beitragsmaß visuell wiedergegeben werden. Hierzu kann z.B. die in Fig. 1 gewählte Positionierung von Balken verwendet werden. D.h., das weitere Beitragsmaß kann durch Balken dargestellt werden, welche sich vom Rand E der Darstellung in radialer Richtung nach innen hin zu dem Ringsegment erstrecken, auf das sich der jeweilige Balken bezieht. Solche Balken können bei einem schwarzen Hintergrund z.B. in weiß wiedergegeben werden.

Die anhand von Fig. 1 bis Fig. 3 beschriebene visuelle Darstellung eines Fehlerbaums wird dem Benutzer auf einer geeigneten Anzeigeeinrichtung, insbesondere auf einem Farbmonitor, präsentiert. Mit einem rechnergestützten Verfahren wird dabei aus dem Fehlerbaum und den entsprechenden Beitragsmaßen die visuelle Darstellung nach Art einer Iris auf dem Monitor erzeugt. Die Darstellung vermittelt dem Benutzer auf einfache Weise zum einen die Struktur des Fehlerbaums und zum anderen auch entsprechende Beiträge der Knoten des Fehlerbaums zum Ausfallverhalten des technischen Systems. Basierend darauf kann das technische System durch den Benutzer schnell bewertet werden, wobei entsprechende Schwachstellen gut erkennbar sind und dann einer weiteren Analyse unterzogen werden können.

## Patentansprüche

1. Verfahren zur rechnergestützten Visualisierung eines Fehlerbaums (FB) eines technischen Systems, das eine Vielzahl von technischen Komponenten umfasst, wobei der Fehlerbaum (FB) eine hierarchische Struktur aus mehreren in Hierarchieebenen (H1, H2) angeordneten Knoten (N1, N2, ..., N6) beschreibt, welche jeweils eine technische Komponente oder eine Kombination aus mehreren technischen Komponenten repräsentieren, welche über einen oder mehrere logische Operatoren verknüpft sind, wobei durch den Fehlerbaum (FB) das Ausfallverhalten des technischen Systems in Abhängigkeit von dem Ausfall der durch die Knoten (N1, N2, ..., N6) repräsentierten technischen Komponenten oder Kombinationen aus technischen Komponenten wiedergegeben wird, wobei für jeden Knoten (N1, N2, ..., N6) ein Beitragsmaß vorgegeben oder ermittelt wird, welches den Beitrag der durch den Knoten (N1, N2, ..., N6) repräsentierten technischen Komponente oder Kombination aus technischen Komponenten zum Ausfallverhalten des technischen Systems wiedergibt, wobei:
- zumindest ein Teil der hierarchischen Struktur des Fehlerbaums (FB) über eine visuelle Darstellung wiedergegeben wird, welche eine Vielzahl von konzentrisch angeordneten Ringsegmenten (R1, R2, ..., R6) umfasst, wobei jedes Ringsegment (R1, R2, ..., R6) einen Knoten (N1, N2, ..., N6) im Fehlerbaum (FB) darstellt und die Hierarchieebene, in welcher der Knoten (N1, N2, ..., N6) im Fehlerbaum (FB) angeordnet ist, umso tiefer liegt, je weiter außen das Ringsegment (R1, R2, ..., R6) in der visuellen Darstellung angeordnet ist;
- die Länge eines jeweiligen Ringsegments (R1, R2, ..., R6) in Umfangsrichtung die Größe des Beitragsmaßes des durch das jeweilige Ringsegment dargestellten Knotens (N1, N2, ..., N6) wiedergibt,
- ein oder mehrere weitere Beitragsmaße für den durch das jeweilige Ringsegment dargestellten Knoten durch ein oder mehrere sich nach innen oder nach außen in radialer Richtung in Bezug auf das entsprechende Ringselement ersteckenden Balken (B, B') dargestellt werden.

2. Verfahren nach Anspruch 1, bei dem ein jeweiliges Ringsegment (R1, R2, ..., R6) zu einem Ring aus einer Anzahl von konzentrisch angeordneten Ringen gehört, wobei jeder Ring eine Hierarchieebene (H1, H2) des Fehlerbaums repräsentiert, die umso tiefer liegt, je weiter außen der Ring angeordnet ist.

3. Verfahren nach Anspruch 1 oder 2, bei dem die benachbart zu einem jeweiligen Ringsegment (R1, R2, ..., R6) weiter außen liegenden Ringsegmente (R1, R2, ..., R6) innerhalb des Kreissektors, der durch das jeweilige Ringsegment (R1, R2, ..., R6) gebildet wird, Kindknoten des Knotens (N1, N2, ..., N6) sind, der durch das jeweilige Ringsegment (R1, R2, ..., R6) dargestellt wird.

4. Verfahren nach einem der vorhergehenden Ansprüche, bei dem für zumindest einen Teil der Knoten (N1, N2, ..., N6) die ein oder mehrere weitere Beitragsmaße vorgegeben oder ermittelt werden, welche einen anderen Beitrag der durch den Knoten (N1, N2, ..., N6) repräsentierten technischen Komponente oder Kombination aus technischen Komponenten zum Ausfallverhalten des technischen Systems wiedergeben.

5. Verfahren nach einem der vorhergehenden Ansprüche, bei dem das Beitragsmaß und/oder die weiteren Beitragsmaße jeweils eine der folgenden Größen sind:
- der Beitrag der durch den Knoten (N1, N2, ..., N6) repräsentierten technischen Komponente oder Kombination aus technischen Komponenten zur Unverfügbarkeit, wobei die Unverfügbarkeit ein Maß für den prozentualen Teil einer Sollbetriebszeit des technischen Systems ist, wobei der prozentuale Teil Ausfälle des technischen Systems repräsentiert;
- der Beitrag der durch den Knoten (N1, N2, ..., N6) repräsentierten technischen Komponente oder Kombination aus technischen Komponenten zur mittleren Ausfallzeit des technischen Systems;
- der Beitrag der durch den Knoten (N1, N2, ..., N6) repräsentierten technischen Komponente oder Kombination aus technischen Komponenten zur Ausfallrate des technischen Systems.

6. Verfahren nach einem der vorhergehenden Ansprüche, wenn abhängig von Anspruch 4, bei dem zumindest für einen Teil der Knoten (N1, N2, ..., N6) und insbesondere für eine technische Komponente repräsentierende Knoten (N1, N2, ..., N6) die Größe des oder der weiteren Beitragsmaße in der visuellen Darstellung vermittelt wird.

7. Verfahren nach Anspruch 6, bei dem die Größe des oder der weiteren Beitragsmaße durch die Länge des einen oder der mehreren Balken (B, B') angegeben wird, welche in der visuellen Darstellung dem entsprechenden Ringsegment (R1, R2, ..., R6) zuordenbar sind.

8. Verfahren nach Anspruch 7, bei dem der oder die Balken (B, B') in dem Kreissektor angeordnet sind, der durch das entsprechende Ringsegment (R1, R2, ..., R6) gebildet wird, zu dem der oder die Balken (B, B') gehören, wobei der oder die Balken (B, B') vorzugsweise in dem Abschnitt des Kreissegments positioniert sind, der sich von dem entsprechenden Ringsegment (R1, R2, ..., R6) radial nach außen erstreckt.

9. Verfahren nach einem der vorhergehenden Ansprüche, bei dem die visuelle Darstellung in einem kreisförmigen Anzeigebereich wiedergegeben ist.

10. Verfahren nach Anspruch 8 und 9, bei dem der oder die Balken (B, B') sich vom Rand (E) des kreisförmigen Anzeigebereichs radial nach innen erstrecken.

11. Verfahren nach einem der vorhergehenden Ansprüche, bei dem die Ringsegmente (R1, R2, ..., R6) durch Einkerbungen (K) in entsprechenden Ringen visuell voneinander unterschieden werden.

12. Verfahren nach einem der vorhergehenden Ansprüche, bei dem die Ringsegmente (R1, R2, ..., R6) nach vorbestimmten Kriterien farblich voneinander unterschieden werden.

13. Verfahren nach Anspruch 12, bei dem Ringsegmente für Knoten (N1, N2, ..., N6), welche eine technische Komponente repräsentieren, in der gleichen Farbe wiedergegeben werden und/oder Ringsegmente für Knoten, welche eine Kombination aus technischen Komponenten repräsentieren, innerhalb des gleichen Rings in der gleichen Farbe und in unterschiedlichen Ringen in verschiedener Farbe wiedergegeben werden, wobei sich die Farbe von Ringsegmenten (R1, R2, ..., R6) für Knoten, welche eine Kombination von technischen Komponenten repräsentieren, vorzugsweise von der Farbe von Ringsegmenten (R1, R2, ..., R6) für Knoten (N1, N2, ..., N6) unterscheidet, welche eine technischen Komponente repräsentieren.

14. Verfahren nach einem der vorhergehenden Ansprüche, bei dem im Zentrum der visuellen Darstellung textuelle Informationen zu dem technischen System und insbesondere zu seinem Ausfallverhalten wiedergegeben werden.

15. Verfahren nach einem der vorhergehenden Ansprüche, bei dem in der visuellen Darstellung Ringsegmente (R1, R2, ..., R6), welche eine vorbestimmte Größe unterschreiten, nicht dargestellt werden, wobei vorzugsweise durch ein oder mehrere vorbestimmte Symbole (S) in der visuellen Darstellung auf solche Ringsegmente R1, R2, ..., R6) hingewiesen wird.

16. Verfahren nach einem der vorhergehenden Ansprüche, bei dem in der visuellen Darstellung textuelle Informationen betreffend zumindest einen Teil der Ringsegmente (R1, R2, ..., R6) wiedergegeben sind oder wiedergebbar sind, wobei die textuellen Informationen insbesondere in Antwort auf eine oder mehrere Benutzerinteraktionen wiedergegeben werden.

17. Verfahren nach einem der vorhergehenden Ansprüche, bei dem mit dem Fehlerbaum (FB) ein technisches System in der Form einer Automatisierungsanlage beschrieben wird.

18. Vorrichtung zur rechnergestützten Visualisierung eines Fehlerbaums (FB) eines technischen Systems, umfassend eine Anzeigeeinrichtung und einer Rechnereinrichtung, wobei die Rechnereinrichtung Signale für die Anzeigeeinrichtung derart erzeugt, dass der Fehlerbaum gemäß einem Verfahren nach einem der vorhergehenden Ansprüche auf der Anzeigeeinrichtung visualisiert wird.

## Claims

1. Method for the computer-aided visualization of a fault tree (FB) of a technical system comprising a multiplicity of technical components, the fault tree (FB) describing a hierarchical structure comprising a plurality of nodes (N1, N2, ..., N6) which are arranged in hierarchical levels (H1, H2) and each represent a technical component or a combination of a plurality of technical components linked via one or more logical operators, the fault tree (FB) representing the failure behaviour of the technical system on the basis of the failure of the technical components or combinations of technical components represented by the nodes (N1, N2, ..., N6), a degree of contribution being predefined or determined for each node (N1, N2, ..., N6), which degree of contribution represents the contribution of the technical component or combination of technical components represented by the node (N1, N2, ..., N6) to the failure behaviour of the technical system:
- at least one part of the hierarchical structure of the fault tree (FB) being represented by means of a visual representation comprising a multiplicity of concentrically arranged ring segments (R1, R2, ..., R6), each ring segment (R1, R2, ..., R6) representing a node (N1, N2, ..., N6) in the fault tree (FB), and the hierarchical level on which the node (N1, N2, ..., N6) is arranged in the fault tree (FB) being lower, the further to the outside the ring segment (R1, R2, ..., R6) is arranged in the visual representation;
- the length of a respective ring segment (R1, R2, ..., R6) in the circumferential direction representing the magnitude of the degree of contribution of the node (N1, N2, ..., N6) represented by the respective ring segment,
- one or more further degrees of contribution for the node represented by the respective ring segment being represented by one or more bars (B, B') extending inwards or outwards in the radial direction with respect to the corresponding ring element.

2. Method according to Claim 1, in which a respective ring segment (R1, R2, ..., R6) belongs to a ring comprising a number of concentrically arranged rings, each ring representing a hierarchical level (H1, H2) of the fault tree which is lower, the further to the outside the ring is arranged.

3. Method according to Claim 1 or 2, in which the ring segments (R1, R2, ..., R6) which are adjacent to a respective ring segment (R1, R2, ..., R6) and are further to the outside are child nodes of the node (N1, N2, ..., N6) represented by the respective ring segment (R1, R2, ..., R6) inside the circle sector formed by the respective ring segment (R1, R2, ..., R6).

4. Method according to one of the preceding claims, in which the one or more further degrees of contribution are predefined or determined for at least some of the nodes (N1, N2, ..., N6), which further degrees of contribution represent a different contribution of the technical component or combination of technical components represented by the node (N1, N2, ..., N6) to the failure behaviour of the technical system.

5. Method according to one of the preceding claims, in which the degree of contribution and/or the further degrees of contribution is/are each one of the following variables:
- the contribution of the technical component or combination of technical components represented by the node (N1, N2, ..., N6) to the unavailability, the unavailability being a measure of the percentage part of a desired operating time of the technical system, the percentage part representing features of the technical system;
- the contribution of the technical component or combination of technical components represented by the node (N1, N2, ..., N6) to the average failure time of the technical system;
- the contribution of the technical component or combination of technical components represented by the node (N1, N2, ..., N6) to the failure rate of the technical system.

6. Method according to one of the preceding claims if dependent on Claim 4, in which the magnitude of the further degree(s) of contribution is conveyed in the visual representation at least for some of the nodes (N1, N2, ..., N6) and, in particular, for nodes (N1, N2, ..., N6) representing a technical component.

7. Method according to Claim 6, in which the magnitude of the further degree(s) of contribution is indicated by the length of the one or more bars (B, B') which can be assigned to the corresponding ring segment (R1, R2, ..., R6) in the visual representation.

8. Method according to Claim 7, in which the bar (s) (B, B') is/are arranged in the circle sector formed by the corresponding ring segment (R1, R2, ..., R6) to which the bar(s) (B, B') belong(s), the bar(s) (B, B') preferably being positioned in that section of the circle segment which extends radially outwards from the corresponding ring segment (R1, R2, ..., R6).

9. Method according to one of the preceding claims, in which the visual representation is represented in a circular display area.

10. Method according to Claims 8 and 9, in which the bar(s) (B, B') extend(s) radially inwards from the edge (E) of the circular display area.

11. Method according to one of the preceding claims, in which the ring segments (R1, R2, ..., R6) are visually distinguished from one another by notches (K) in corresponding rings.

12. Method according to one of the preceding claims, in which the ring segments (R1, R2, ..., R6) are distinguished from one another in terms of colour according to predetermined criteria.

13. Method according to Claim 12, in which ring segments for nodes (N1, N2, ..., N6) representing a technical component are represented in the same colour, and/or ring segments for nodes representing a combination of technical components are represented in the same colour inside the same ring and are represented in a different colour in different rings, the colour of ring segments (R1, R2, ..., R6) for nodes representing a combination of technical components preferably differing from the colour of ring segments (R1, R2, ..., R6) for nodes (N1, N2, ..., N6) representing a technical component.

14. Method according to one of the preceding claims, in which textual information relating to the technical system and, in particular, relating to its failure behaviour is represented in the centre of the visual representation.

15. Method according to one of the preceding claims, in which ring segments (R1, R2, ..., R6) which undershoot a predetermined size are not represented in the visual representation, reference preferably being made to such ring segments (R1, R2, ..., R6) by means of one or more predetermined symbols (S) in the visual representation.

16. Method according to one of the preceding claims, in which textual information relating to at least some of the ring segments (R1, R2, ..., R6) is or can be represented in the visual representation, the textual information being represented, in particular, in response to one or more user interactions.

17. Method according to one of the preceding claims, in which the fault tree (FB) is used to describe a technical system in the form of an automation installation.

18. Apparatus for the computer-aided visualization of a fault tree (FB) of a technical system, comprising a display device and a computer device, the computer device generating signals for the display device in such a manner that the fault tree is visualized on the display device in accordance with a method according to one of the preceding claims.

## Revendications

1. Procédé de visualisation assistée par ordinateur d'un arbre de défaillance (FB) d'un système technique qui comprend une pluralité de composants techniques, l'arbre de défaillance (FB) décrivant une structure hiérarchique composée de plusieurs noeuds (N1, N2, ..., N6), lesquels sont placés dans des niveaux hiérarchiques (H1, H2) et représentent chacun un composant technique ou une combinaison de plusieurs composants techniques liés par un ou plusieurs opérateurs logiques, l'arbre de défaillance (FB) indiquant le comportement de panne du système technique en fonction de la panne des composants techniques ou combinaisons de composants techniques représentés par les noeuds (N1, N2, ..., N6), pour chaque noeud (N1, N2, ..., N6) un niveau de contribution étant prédéfini ou déterminé, qui indique la contribution du composant technique ou de la combinaison de composants techniques représentés par le noeud (N1, N2, ..., N6) au comportement de panne du système technique,
- au moins une partie de la structure hiérarchique de l'arbre de défaillance (FB) étant présentée par une illustration visuelle qui comprend une pluralité de segments annulaires (R1, R2, ..., R6) disposés concentriquement, sachant que chaque segment annulaire (R1, R2, ..., R6) représente un noeud (N1, N2, ..., N6) dans l'arbre de défaillance (FB) et le niveau hiérarchique dans lequel le noeud (N1, N2, ..., N6) se trouve dans l'arbre de défaillance (FB) est d'autant plus bas que le segment annulaire (R1, R2, ..., R6) est situé à l'extérieur dans l'illustration visuelle ;
- la longueur d'un segment annulaire respectif (R1, R2, ..., R6), dans le sens circonférentiel, indiquant la grandeur du niveau de contribution du noeud (N1, N2, ..., N6) représenté par le segment annulaire respectif,
- un ou plusieurs autres niveaux de contribution pour le noeud représenté par le segment annulaire respectif étant représentés par une ou plusieurs barres (B, B') s'étendant vers l'intérieur ou vers l'extérieur dans le sens radial par rapport au segment annulaire correspondant.

2. Procédé selon la revendication 1, dans lequel un segment annulaire respectif (R1, R2, ..., R6) fait partie d'un anneau composé d'un certain nombre d'anneaux disposés concentriquement, chaque anneau représentant un niveau hiérarchique (H1, H2) de l'arbre de défaillance, lequel niveau est d'autant plus bas que l'anneau est situé à l'extérieur.

3. Procédé selon la revendication 1 ou 2, dans lequel les segments annulaires (R1, R2, ..., R6) adjacents à un segment annulaire respectif (R1, R2, ..., R6) et situés plus à l'extérieur dans le secteur circulaire formé par le segment annulaire respectif (R1, R2, ..., R6) sont des noeuds enfants du noeud (N1, N2, ..., N6) qui est représenté par le segment annulaire respectif (R1, R2, ..., R6).

4. Procédé selon l'une des revendications précédentes, dans lequel, pour au moins une partie des noeuds (N1, N2, ..., N6), lesdits un ou plusieurs autres niveaux de contribution, qui indiquent une autre contribution du composant technique ou de la combinaison de composants techniques représentés par le noeud (N1, N2, ..., N6) au comportement de panne du système technique, sont prédéfinis ou déterminés.

5. Procédé selon l'une des revendications précédentes, dans lequel le niveau de contribution et/ou les autres niveaux de contribution sont à chaque fois une des grandeurs suivantes :
- la contribution du composant technique ou de la combinaison de composants techniques représentés par le noeud (N1, N2, ..., N6) à la non-disponibilité, la non-disponibilité étant une mesure du pourcentage d'une durée de fonctionnement théorique du système technique, le pourcentage représentant des pannes du système technique ;
- la contribution du composant technique ou de la combinaison de composants techniques représentés par le noeud (N1, N2, ..., N6) au temps moyen de panne du système technique ;
- la contribution du composant technique ou de la combinaison de composants techniques représentés par le noeud (N1, N2, ..., N6) au taux de panne du système technique.

6. Procédé selon l'une des revendications précédentes si dépendante de la revendication 4, dans lequel, au moins pour une partie des noeuds (N1, N2, ..., N6) et en particulier pour les noeuds (N1, N2, ..., N6) qui représentent un composant technique, la grandeur du ou des autres niveaux de contribution est fournie dans l'illustration visuelle.

7. Procédé selon la revendication 6, dans lequel la grandeur du ou des autres niveaux de contribution est donnée par la longueur du ou des plusieurs barres (B, B') qui peuvent être associées dans l'illustration visuelle au segment annulaire correspondant (R1, R2, ..., R6).

8. Procédé selon la revendication 7, dans lequel la ou les barres (B, B') sont placées dans le secteur circulaire qui est formé par le segment annulaire correspondant (R1, R2, ..., R6) auquel le ou les barres (B, B') appartiennent, le ou les barres (B, B') étant de préférence positionnées dans la partie du segment circulaire, qui s'étend du segment annulaire correspondant (R1, R2, ..., R6) radialement vers l'extérieur.

9. Procédé selon l'une des revendications précédentes, dans lequel l'illustration visuelle est affichée dans une zone d'affichage circulaire.

10. Procédé selon la revendication 8 et 9, dans lequel le ou les barres (B, B') s'étendent du bord (E) de la zone d'affichage circulaire radialement vers l'intérieur.

11. Procédé selon l'une des revendications précédentes, dans lequel les segments annulaires (R1, R2, ..., R6) sont différenciés les uns des autres visuellement par des encoches (K) dans des anneaux correspondants.

12. Procédé selon l'une des revendications précédentes, dans lequel les segments annulaires (R1, R2, ..., R6) sont différenciés les uns des autres par la couleur selon des critères prédéfinis.

13. Procédé selon la revendication 12, dans lequel des segments annulaires pour des noeuds (N1, N2, ..., N6) qui représentent un composant technique sont indiqués dans la même couleur et/ou des segments annulaires pour des noeuds qui représentent une combinaison de composants techniques sont indiqués à l'intérieur du même anneau dans la même couleur et dans des anneaux différents dans des couleurs différentes, la couleur de segments annulaires (R1, R2, ..., R6) pour des noeuds qui représentent une combinaison de composants techniques étant de préférence différente de la couleur de segments annulaires (R1, R2, ..., R6) pour des noeuds (N1, N2, ..., N6) qui représentent un composant technique.

14. Procédé selon l'une des revendications précédentes, dans lequel des informations textuelles sur le système technique et en particulier sur son comportement de panne sont indiquées au centre de l'illustration visuelle.

15. Procédé selon l'une des revendications précédentes, dans lequel les segments annulaires (R1, R2, ..., R6) inférieurs à une taille prédéfinie ne figurent pas dans l'illustration visuelle, de tels segments annulaires (R1, R2, ..., R6) étant signalés dans l'illustration visuelle de préférence par un ou plusieurs symboles prédéfinis (S).

16. Procédé selon l'une des revendications précédentes, dans lequel des informations textuelles concernant au moins une partie des segments annulaires (R1, R2, ..., R6) sont ou peuvent être indiquées dans l'illustration visuelle, les informations textuelles étant indiquées en particulier en réponse à une ou plusieurs interactions d'utilisateurs.

17. Procédé selon l'une des revendications précédentes, dans lequel l'arbre de défaillance (FB) permet de décrire un système technique se présentant sous la forme d'une installation d'automatisation.

18. Dispositif de visualisation assistée par ordinateur d'un arbre de défaillance (FB) d'un système technique, comprenant un dispositif d'affichage et un dispositif informatique, le dispositif informatique générant des signaux pour le dispositif d'affichage de sorte que l'arbre de défaillance est visualisé sur le dispositif d'affichage conformément à un procédé selon l'une des revendications précédentes.
